Europäisches Patentamt

(19) European Patent Office

Office européen des brevets

(11) **EP 0 526 645 B1**

(12) **EUROPEAN PATENT SPECIFICATION**

(45) Date of publication and mention
of the grant of the patent:
**05.11.1997 Bulletin 1997/45**

(21) Application number: **92904996.3**

(22) Date of filing: **13.02.1992**

(51) Int. Cl.⁶: $B41M\ 5/38$, $B41M\ 5/00$

(86) International application number:
**PCT/JP92/00141**

(87) International publication number:
**WO 92/14617 (03.09.1992 Gazette 1992/23)**

(54) **DYEABLE RESIN FOR SUBLIMATION TYPE TRANSFER IMAGE RECEIVER AND IMAGE RECEIVER USING SAID RESIN**

FÄRBBARES HARZ FÜR TRANSFER-BILDEMPFÄNGER VOM SUBLIMATIONSTYP UND BILDEMPFÄNGER, IN WELCHEM DIESES HARZ VERWENDET WIRD

RESINE COLORABLE POUR RECEPTEUR D'IMAGES PAR TRANSFERT DU TYPE A SUBLIMATION ET RECEPTEUR D'IMAGES UTILISANT UNE TELLE RESINE

(84) Designated Contracting States:
**DE FR GB**

(30) Priority: **15.02.1991 JP 44147/91**
**30.08.1991 JP 246912/91**
**09.10.1991 JP 290537/91**

(43) Date of publication of application:
**10.02.1993 Bulletin 1993/06**

(73) Proprietor:
**Toyo Boseki Kabushiki Kaisha**
**Osaka-shi Osaka 530 (JP)**

(72) Inventors:
• **ASAI, Haruo**
**Ohtsu-shi Shiga 520-02 (JP)**
• **KUWABARRA, Mitsuru**
**Ohtsu-shi Shiga 520-02 (JP)**

• **KOTERA, Nobukazu**
**Ohtsu-shi Shiga 520-02 (JP)**
• **FUJIMOTO, Hiroshi**
**Ohtsu-shi Shiga 520-02 (JP)**

(74) Representative:
**Tauchner, Paul, Dr.**
**Vossius & Partner**
**Postfach 86 07 67**
**81634 München (DE)**

(56) References cited:
**EP-A- 0 273 347**       **EP-A- 0 481 129**
**EP-A- 0 481 200**       **EP-A- 0 499 099**
**JP-A- 2 001 383**       **JP-A- 2 112 991**
**JP-A- 2 214 691**       **JP-A- 2 245 381**
**JP-A-63 007 972**       **JP-A-63 056 496**
**JP-A-63 312 188**       **JP-A-64 030 793**

**Description**

The present invention relates to a dye-receiving resin for sublimation transfer image receiving material to be used in combination with thermal transfer sheet containing sublimable dye, and to an image receiving material comprising same.

This method is conventionally intended for obtaining printed images by heating thermal dye transfer sheets applied with sublimable disperse dyes, by a thermal head, etc., and allowing said sublimable dyes to transfer to dye receiving papers to be brought into contact with the thermal dye transfer sheets.

As the dye-receiving resin used for the dye-receiving layer (image receiving layer) of the aforesaid sublimation transfer image receiving paper, conventionally known are those mainly containing saturated polyesters, as disclosed in Japanese Patent Unexamined Publication Nos. 107885/1982, 64899/1985, 258790/1986, and 105689/1987.

EP-A-481 129 a document according to Art. 54(3) and 54(4) EPC refers to a dye-image receiving element comprising a support having thereon a layer containing a (co)polyester comprising condensation residues of one or more diols and one or more dicarboxylic acids wherein at least one of said diols and/or said dicarboxylic acids contains not more than 5 carbon atoms in the main chain and contains a long chain alkyl or alkylene group having at least 6 carbon atoms in a side chain.

EP-A-481 200 a document according to Art. 54(3) and 54(4) EPC refers to a dye receiving element comprising a support and a layer, the latter is formed from a polyester containing diols and dicarboxylic acids, wherein the diol component of the polyester consists of 0.5-60 mol-% of a dimeric diol.

EP-A-499 099 a document according to Art. 54(3) and 54(4) EPC refers to a dye receiving element comprising a support and a layer containing a graft polymerisate of an unsaturated copolyester and a vinyl copolymerisate.

EP-A-273 347 refers to a thermal print element having at least one layer of adhesive thereon comprising a linear, random copolyester of one or more aromatic dibasic acids and one or more aliphatic diols.

In this regard, when saturated polyester is used as a resin for dyeing, it affords high quality images superior in tone and color reproduction. Yet, it is not sufficient in preservation stability of images in terms of color density, and light-resistance, heat stability, resistance to moisture, resistance to staining by fats and oils as represented by those of finger prints, and resistance to staining by plasticizers in erasers, vinyl chloride sheets, etc., of the recorded images. Particularly, a long-term preservation gives rise to problems of color change, turbulence of images, and so on.

In an attempt to solve the aforementioned problems, the present inventors have conducted intensive studies of dye-receiving resin which forms a dye-receiving layer of sublimation transfer image receiving materials, and found that the polyester resin to be described later is superior in light-resistance, heat stability, and preservation stability of printed images, which resulted in a sublimation transfer image receiving material having a base material and a dye-receiving layer formed thereon wherein the dye-receiving layer mainly consists of a polyester resin comprising an aromatic dicarboxylic acid component as the main component of the acid component and a glycol component comprising an alicyclic glycol component with the provisos that

a) the polyester resin is not a (co)polyester comprising condensation residues of one or more diols and one or more dicarboxylic acids wherein at least one of said diols and/or said dicarboxylic acids contains no more than 5 carbon atoms in the main chain and contains a long chain alkyl or alkylene group having at least 6 carbon atoms in a side chain,

b) the polyester resin is not a polyester formed from dicarboxylic and diols characterized in that 0.5 to 60 mol % of the diol component of the polyester is a dialkyl-substituted diol with 24 or more carbon atoms obtainable by hydration from dimer fatty acids, optionally substituted with a saturated, unsaturated or aromatic carboxylic ring, and

c) the polyester resin is not a polyester resin formed from an unsaturated copolyester and a vinylcopolymer grafted thereon.

The aromatic carboxylic acid component which is the main component of dicarboxylic acid component of the polyester resin of the present invention is exemplified by terephthalic acid, isophthalic acid, orthophthalic acid, 2,3-naphthalic acid, 1,1,3-trimethyl-3-phenylindene-4', 5-dicarboxylic acid, sodium 5-sulfoisophthalic acid, naphthalene dicarboxylic acid, or the like. As usable dicarboxylic acids other than the aromatic dicarboxylic acids, exemplified are aromatic oxycarboxylic acids such as p-(hydroxyethoxy)benzoic acid, aliphatic dicarboxylic acids such as succinic acid, adipic acid, azelaic acid, sebacic acid, and dodecanoic dicarboxylic acid, unsaturated aliphatic or alicyclic dicarboxylic acids such as fumaric acid, maleic acid, tetrahydrophthalic acid, and 1,4-cyclohexanedicarboxylic acid, and tri- and tetracarboxylic acids such as trimellitic acid, and pyromellitic acid. Of these acid components, the aromatic dicarboxylic acid is preferably contained in a proportion of not less than 60 mol%, more preferably not less than 70 mol% in the entire acid components. Where, of the above-mentioned acid components, the aromatic dicarboxylic acid is less than 60 mol%, the glass transition temperature of the resin becomes lower, thus resulting in blocking of coating. Of the aromatic dicarboxylic acids, the use of terephthalic acid and isophthalic acid in combination is preferable from the aspect of solubility in solvent.

The alicyclic glycol contained in the glycol component of the polyester resin of the present invention is a glycol having a tricyclodecane skeleton or/and cyclohexane skeleton. The glycol having a tricyclodecane skeleton is exemplified by tricyclodecanedimethylol, or/and its addition product with alkylene oxide. The glycol having cyclohexane skeleton is exemplified by 1,4-cyclohexanedimethanol, or/and its addition product with alkylene oxide. These alicyclic glycols can be used solely or in combination. Examples of the glycol component to be used in combination with the glycol component comprising alicyclic glycol are ethylene glycol, propylene glycol, neopentyl glycol, diethylene glycol, dipropylene glycol, polyethylene glycol, tripropylene glycol, 2,3,4-trimethylol-1,3-pentanediol, 1,6-hexanediol, the addition product of bisphenol A with ethylene oxide, the addition product of hydrogenated bisphenol A with ethylene oxide and/or propylene oxide, 2,2-diethyl-1,3-propanediol, 2-n-butyl-2-ethyl-1,3-propanediol, and the like. Of these, preferred are neopentyl glycol, ethylene glycol, polyethylene glycol, and the addition product of bisphenol A with ethylene oxide.

Besides glycol component, a small amount of polyhydric alcohol such as trimethylolpropane, trimethylolethane, glycerine, etc. may be copolymerized to the extent that it is not detrimental to the properties of the polyester resin of the present invention.

It is essential that the polyester resin of the present invention contains an alicyclic glycol in the glycol component, preferably in a proportion of not less than 20 mol%. Where the content of the aforesaid glycol is less than 20 mol%, durability of images tends to become poor.

The number average molecular weight of the polyester resin of the present invention is preferably 1,000-100,000, more preferably 2,000-50,000. Where the molecular weight is less than 1,000, the strength of the dye-receiving layer coating becomes lower, whereas where it is more than 100,000, the solution viscosity becomes undesirably too high to handle easily.

The glass transition temperature of the polyester resin of the present invention is preferably between 40°C and 120°C. Where it is less than 40°C, blocking and blurring of images easily occur, and where it is higher than 120°C, transfer failure tends to occur.

The specific gravity of the polyester resin of the present invention is preferably between 1.15 and 1.50, more preferably between 1.20 and 1.40. Too low a specific gravity results in poor image durability, and too high a specific gravity can easily cause dyeing failure.

In some cases, the polyester resin of the present invention may be used upon modification of the molecule chain terminal hydroxyl group or carboxyl group by reaction thereof with compounds capable of reacting with these groups, such as acid anhydrides.

In the present invention, resin(s) other than the polyester resin of the present invention may be also mixed. The resin to be mixed may be, but not limited to, polyvinyl resins, polycarbonate resins, polyacrylic acid resins, polymethacrylic acid resins, polyolefin resins, cellulose derivative resins, polyether resins, and polyester resins. The polyester resin of the present invention may be thermoset or crosslinked so as to improve durability of images. Examples of the thermosetting resin concurrently used with a crosslinking agent include silicone resin, melamine resin, phenol-formaldehyde resin, epoxy resin, isocyanate resin, and so on. The crosslinking can be performed by condensation reaction, addition reaction, ionic crosslinking, radiation crosslinking, and so on. In the present invention, various lubricants may be added to the polyester resin for improving releasability from thermal dye transfer sheet.

Such lubricants include fluororesins, silicone resins, and surface lubricants such as organic sulfonate compounds, organic phosphate compounds, and organic carboxylate compounds.

Also, ultraviolet absorbers, antioxidants, dyeing sensitizers, and so on may be added to the polyester resin of the present invention for improving light-resistance of recorded images.

While no limitation is imposed on the base material to be used as a receiving material for sublimation transfer images, usable are paper, synthetic paper, various films, various sheets, and so on.

The method for coating the polyester resin of the present invention generally comprises dissolving said polyester resin in a solvent for use, or using the polyester resin in a form of non-aqueous dispersion, aqueous dispersion or aqueous solution (without solvent). The solid content is normally 5-70% by weight.

The present invention is hereinbelow detailedly described by way of production examples and examples, wherein a mere "part" means "part by weight", and "%" means "% by weight".

The number average molecular weight of the polymers produced was determined by GPC, the polymer composition was identified by $^1$H-NMR, and the glass transition temperature was measured by DSC, the results of which are summarized in Table 1.

Dyeing concentration, light-resistance, and heat resistance were determined by the methods given below. The determination results are shown in Table 2.

(1) Production of polyester resins

In an autoclave equipped with a thermometer and a stirrer were charged 243 parts of dimethyl terephthalate, 243 parts of dimethyl isophthalate, 245 parts of tricyclodecanedimethylol (TCD-Alkohol DM, manufactured by Hoechst), 264 parts of ethylene glycol, and 0.5 part of tetrabutoxytitanate, and the mixture was heated at 150-220°C for 240 minutes for transesterification, after which the reaction system was heated to 250°C over 30 minutes. The pressure of the system was gradually reduced to not more than 0.3 mmHg in 45 minutes, under which condition the reaction was continued further for 75 minutes to give pale yellow transparent polyester resin A. The number average molecular weight of the resin obtained was 21,000. Polyesters B-K obtained by the similar production method are shown in Table 1.

(2) Evaluation of density of printed images

An image receiving sheet and a thermal dye transfer sheet were respectively superposed so that the dye-receiving layer (dye receptor layer) of the image receiving material and a coloring material layer of the thermal dye transfer sheet were brought into contact. The thermal dye transfer sheet was heated from the base material side thereof using a thermal head (0.7 W/dot head output, 8 ms head heating time, 3 dots/mm dot density) to allow the cyan dye in the coloring material layer to transfer to the dye-receiving layer. The density of the transferred images thus obtained was determined by reflection densitometer (DM-600, manufactured by Dainippon Screen Co., Ltd.).

(3) Evaluation of light-resistance

The image receiving sheet to which cyan dye had been transferred was exposed to a xenon lamp at 40°C so that the energy given thereby was 67.0 $J/m^2$, and dye density retention (%) was estimated from the comparison of the image densities before and after the light-resistance test.

$$\text{Dye density retention (\%)} = \frac{\text{Density after light-resistance test}}{\text{Density before light-resistance test}} \times 100$$

(4) Evaluation of heat resistance (percent color fading)

An image receiving sheet to which cyan dye had been transferred was left standing in a dark place at 60°C for 168 hours for aging, and dye density retention (%) was estimated from the comparison with the image density before the heat-resistance test.

(5) Evaluation of resistance to plasticizer

An 80 $\mu$m-thick vinyl chloride film (1 $cm^2$) was adhered onto the surface of an image receiving sheet to which cyan dye had been transferred, and a 5 g-load was applied on the vinyl chloride film, after which it was left standing at 40°C for 24 hours. Decoloring of the cyan dye and trace of the film were examined. Those showing no trace of the film on the surface of the image receiving sheet nor any change such as decoloring after the aging were expressed by ◯, those showing no color change but showing trace of the film after the aging were expressed by △, and those showing both color change and trace of the film after the aging were expressed by X.

(6) Evaluation of resistance to finger print

Thumb was pressed hard against the surface of the image receiving sheet to which the cyan dye had been transferred to leave a finger print on the surface of the images. The sheet was left standing at 40°C for 48 hours, and agglomeration of cyan dye, decoloring, and trace of the finger print were examined. Those showing no trace of the finger print on the surface of the image receiving layer nor color change after the aging were expressed by ◯, those showing no color change but showing trace of the finger print after the aging were expressed by △, and those showing agglomeration of the dye on the image surfaces after the aging were expressed by X.

(7) Evaluation of image preservation stability

An image receiving sheet to which cyan dye had been transferred was left standing in a dark place at 50°C for a week for aging.

After the aging, printed dots were examined with a 40 × magnification magnifying glass, and those showing apparent blurring due to the diffusion of the dye between printed dots were expressed by X, and those permitting confirmation of printed dots in the same manner as just after printing were expressed by ◯.

Example 1

The polyester resin A for a dye receiving layer was diluted with a mixed solvent of toluene:methyl ethyl ketone=50:50 into a 20% solution. To this solution was added an epoxy-modified silicone oil (KF-102, manufactured by Shin-Etsu Chemical Co. Ltd.) in a proportion of 10% by weight relative to said resin, and the mixture was applied on a 150 μm-thick synthetic paper (Yupo PPG-150, manufactured by Oji Yuka Co., Ltd.) with a wire bar so that the thickness of dry coating became 4 μm. This sheet was dried at 120°C for 30 minutes to form a dye-receiving layer (image receiving layer).

Examples 2-9

Using polyester resins B-I, dye-receiving layers were formed in the same manner as in Example 1, and used in Examples 2-9, respectively.

Comparative Example 1

Using polyester resin J, a dye-receiving layer was formed in the same manner as in Example 1, and used in Comparative Example 1.

Comparative Example 2

Using polyester resin K, a dye-receiving layer was formed in the same manner as in Example 1, and used in Comparative Example 2.

Table 1

| Polyester resin | Acid Components (molar ratio) | | | | | Glycol Components (molar ratio) | | | | Number Average Molecular Weight | Glass Transition Temperature (°C) | Specific Gravity |
|---|---|---|---|---|---|---|---|---|---|---|---|---|
| | T P A | I P A | C H D A | S A | T M A | T C D | C H D M | E G | N P G | | | |
| A | 50 | 50 | | | | 50 | | 50 | | 21000 | 85 | 1.261 |
| B | 65 | 35 | | | | | 35 | 65 | | 18000 | 70 | 1.283 |
| C | 60 | 40 | | | | 20 | 20 | 60 | | 21000 | 73 | 1.275 |
| D | 30 | 40 | 30 | | | | 40 | 60 | | 24000 | 53 | 1.261 |
| E | 50 | 45 | | 5 | | 50 | | 25 | 25 | 17000 | 72 | 1.220 |
| F | 50 | 48 | | | 2 | 90 | | | 10 | 18000 | 95 | 1.215 |
| G | 50 | 48 | | | 2 | 50 | | | 50 | 18000 | 80 | 1.215 |
| H | 65 | | 35 | | | | 35 | 65 | | 27000 | 55 | 1.252 |
| I | 65 | | 35 | | | | 35 | 65 | | 5000 | 54 | 1.252 |
| J | 50 | 50 | | | | | | 50 | 50 | 17500 | 65 | 1.260 |
| K | 20 | 20 | 20 | 40 | | 90 | | | 10 | 18000 | 5 | 1.180 |

In Table 1, each abbreviation stands for the following.

TPA : terephthalic acid
IPA : isophthalic acid
CHDA : cyclohexanedicarboxylic acid
SA : sebacic acid
TMA : trimellitic acid
TCD : tricyclodecanedimethylol (TCD-Alkohol DM®)
CHDM : cyclohexanedimethylol
EG : ethylene glycol
NPG : neopentyl glycol

Table 2

| | Print density | Light-resistance (%) | Resistance to plasticizer | Resistance to finger print | Heat resistance (%) | Image preservation |
|---|---|---|---|---|---|---|
| Ex.1 | 2.2 | 93 | ○ | ○ | 98 | ○ |
| Ex.2 | 2.3 | 90 | ○ | ○ | 98 | ○ |
| Ex.3 | 2.2 | 91 | ○ | ○ | 96 | ○ |
| Ex.4 | 2.5 | 90 | ○ | ○ | 91 | ○ |
| Ex.5 | 2.4 | 94 | △ | △ | 99 | ○ |
| Ex.6 | 2.3 | 94 | ○ | ○ | 100 | ○ |
| Ex.7 | 2.2 | 93 | ○ | ○ | 98 | ○ |
| Ex.8 | 2.3 | 95 | ○ | ○ | 98 | ○ |
| Ex.9 | 2.3 | 94 | ○ | ○ | 94 | ○ |
| Com. Ex.1 | 1.8 | 65 | X | X | 80 | ○ |
| Com. Ex.2 | 2.3 | 80 | △ | △ | 80 | X |

As is evident from Table 2, an image receiving material comprising the dye-receiving resin of the present invention as a dye-receiving resin for the image receiving layer (dye-receiving layer) exhibits high dye-receiving sensitivity, high light-resistance, high resistance to plasticizer, finger prints, and heat, and superior durability and preservation of images.

Since the image receiving layer of sublimation thermosensible recording paper containing, as a main component, a polyester resin of the present invention comprising alicyclic component exhibits high dye-receiving sensitivity, and the images transferred have light-resistance, resistance to plasticizer, resistance to finger prints, and so on, which afford superior durability and preservation stability of images, it can provide a sublimation thermosensible recording paper having a variety of superior properties which have not been obtained heretofore, and is industrially useful.

## Claims

1. A sublimation transfer image receiving material having a base material and a dye-receiving layer formed thereon wherein the dye-receiving layer mainly consists of a polyester resin comprising an aromatic dicarboxylic acid component as the main component of the acid component and a glycol component comprising an alicyclic glycol component with the provisos that

   a) the polyester resin is not a (co)polyester comprising condensation residues of one or more diols and one or more dicarboxylic acids wherein at least one of said diols and/or said dicarboxylic acids contains no more than 5 carbon atoms in the main chain and contains a long chain alkyl or alkylene group having at least 6 carbon atoms in a side chain,
   b) the polyester resin is not a polyester formed from dicarboxylic and diols characterized in that 0.5 to 60 mol % of the diol component of the polyester is a dialkyl-substituted diol with 24 or more carbon atoms obtainable by hydration from dimer fatty acids, optionally substituted with a saturated, unsaturated or aromatic carboxylic ring, and
   c) the polyester resin is not a polyester resin formed from an unsaturated copolyester and a vinylcopolymer grafted thereon.

2. Sublimation transfer image receiving material according to claim 1 wherein the alicyclic glycol component of the polyester resin comprises tricyclodecane units and/or cyclohexane units.

3. Sublimation transfer image receiving material according to claim 1 or 2 wherein the acid component of the polyester resin comprises an aromatic dicarboxylic acid component and an alicyclic dicarboxylic acid component.

4. Use of a polyester resin comprising an aromatic dicarboxylic acid component as the main component of the acid component and a glycol component comprising an alicyclic glycol component as dye-receiving resin in the dye-receiving layer of a sublimation transfer image receiving material with the provisos that

a) the polyester resin is not a (co)polyester comprising condensation residues of one or more diols and one or more dicarboxylic acids wherein at least one of said diols and/or said dicarboxylic acids contains no more than 5 carbon atoms in the main chain and contains a long chain alkyl or alkylene group having at least 6 carbon atoms in a side chain,
b) the polyester resin is not a polyester formed from dicarboxylic and diols characterized in that 0.5 to 60 mol % of the diol component of the polyester is a dialkyl-substituted diol with 24 or more carbon atoms obtainable by hydration from dimer fatty acids, optionally substituted with a saturated, unsaturated or aromatic carboxylic ring, and
c) the polyester resin is not a polyester resin formed from an unsaturated copolyester and a vinylcopolymer grafted thereon.

**Patentansprüche**

1. Bildaufzeichnungsmaterial zur Sublimationsübertragung, das ein Grundmaterial und eine darauf ausgebildete Farbstoffaufnahmeschicht aufweist, wobei die Farbstoffaufnahmeschicht hauptsächlich aus einem Polyesterharz besteht, das als Hauptkomponente der Säurekomponente eine aromatische Dicarbonsäurekomponente und eine eine alicyclische Glykolkomponente umfassende Glykolkomponente umfaßt, mit den Maßgaben, daß

a) das Polyesterharz kein (Co)polyester, umfassend die Kondensationsrückstände von einem oder mehreren Diolen und einer oder mehreren Dicarbonsäuren ist, wobei mindestens eines der Diole und/oder der Dicarbonsäuren nicht mehr als 5 Kohlenstoffatome in der Hauptkette enthält und einen langkettigen Alkyl- oder Alkylenrest mit mindestens 6 Kohlenstoffatomen in der Seitenkette enthält,
b) das Polyesterharz kein Polyester hergestellt aus Dicarbonsäuren und Diolen, dadurch gekennzeichnet, daß 0,5 bis 60 Mol-% der Diolkomponente des Polyesters ein dialkylsubstituiertes Diol mit 24 oder mehr Kohlenstoffatomen, erhältlich aus dimeren Fettsäuren durch Hydratation, gegebenenfalls substituiert mit einem gesättigten, ungesättigten oder aromatischen Carboxylring, ist, und
c) das Polyesterharz kein Polyesterharz ist, das aus einem ungesättigten Copolyester und einem darauf gepfropften Vinylcopolymer hergestellt ist.

2. Bildempfangsmaterial zur Sublimationsübertragung nach Anspruch 1, wobei die alicyclische Glykolkomponente des Polyesterharzes Tricyclodecaneinheiten und/oder Cyclohexaneinheiten umfaßt.

3. Bildempfangsmaterial zur Sublimationsübertragung nach Anspruch 1 oder 2, wobei die Säurekomponente des Polyesterharzes eine aromatische Dicarbonsäurekomponente und eine alicyclische Dicarbonsäurekomponente umfaßt.

4. Verwendung eines Polyesterharzes, umfassend als Hauptkomponente der Säurekomponente eine aromatische Dicarbonsäurekomponente und eine eine alicyclische Glkykolkomponente umfassende Glykolkomponente, als Farbstoffaufnahmeharz in der Farbstoffaufnahmeschicht des Bildempfangsmaterials zur Sublimationsübertragung mit den Maßgaben, daß

a) das Polyesterharz kein (Co)polyester, umfassend die Kondensationsrückstände von einem oder mehreren Diolen und einer oder mehreren Dicarbonsäuren ist, wobei mindestens eines der Diole und/oder der Dicarbonsäuren nicht mehr als 5 Kohlenstoffatome in der Hauptkette enthält und einen langkettigen Alkyl- oder Alkylenrest mit mindestens 6 Kohlenstoffatomen in der Seitenkette enthält,
b) das Polyesterharz kein Polyester hergestellt aus Dicarbonsäuren und Diolen, dadurch gekennzeichnet, daß 0,5 bis 60 Mol-% der Diolkomponente des Polyesters ein dialkylsubstituiertes Diol mit 24 oder mehr Kohlenstoffatomen, erhältlich aus dimeren Fettsäuren durch Hydratation, gegebenenfalls substituiert mit einem gesättigten, ungesättigten oder aromatischen Carboxylring, ist, und
c) das Polyesterharz kein Polyesterharz ist, das aus einem ungesättigten Copolyester und einem darauf gepfropften Vinylcopolymer hergestellt ist.

**Revendications**

1. Matière réceptrice d'image de transfert par sublimation ayant une matière de base et une couche réceptrice de colorant formée dessus dans laquelle la couche réceptrice de colorant se compose principalement d'une résine polyester comprenant un composant acide aromatique dicarboxylique en tant que composant principal du composant acide et un composant glycol comprenant un composant glycol alicyclique, à condition:

a) que la résine polyester ne soit pas un (co)polyester comprenant des résidus de condensation d'un ou plusieurs diols et d'un ou plusieurs acides dicarboxyliques dans lesquels au moins un desdits diols et/ou desdits acides dicarboxyliques ne contient pas plus de 5 atomes de carbone dans la chaîne principale et contient un groupe alkyle ou alkylène à longue chaîne ayant au moins 6 atomes de carbone dans une chaîne secondaire;
b) que la résine polyester ne soit pas un polyester formé à partir de l'acide dicarboxylique et des diols, caractérisée en ce que 0,5 à 60% en moles du composant diol du polyester est un diol substitué par un groupe dialkyle avec 24 atomes de carbone, ou plus, que l'on peut obtenir par hydratation à partir d'acides gras dimères, éventuellement substitués par un cycle carboxylique saturé, insaturé ou aromatique; et
c) que la résine polyester ne soit pas une résine polyester formée à partir d'un copolyester insaturé et d'un copolymère vinylique greffé dessus.

2. Matière réceptrice d'image de transfert par sublimation selon la revendication 1, dans laquelle le composant glycol alicyclique de la résine polyester comprend des motifs tricyclodécane et/ou des motifs cyclohexane.

3. Matière réceptrice d'image de transfert par sublimation selon la revendication 1 ou 2, dans laquelle le composent acide de la résine polyester comprend un composent acide dicarboxylique aromatique et un composant acide dicarboxylique alicyclique.

4. Utilisation d'une résine polyester comprenant un composant acide dicarboxylique aromatique en tant que composent principal du composent acide et un composant glycol comprenant un composant glycol alicyclique en tant que résine réceptrice de colorant dans la couche réceptrice de colorant d'une matière réceptrice d'image de transfert par sublimation à condition:

a) que la résine polyester ne soit pas un (co)polyester comprenant des résidus de condensation d'un ou plusieurs diols et d'un ou plusieurs acides dicarboxyliques dans lesquels au moins un desdits diols et/ou desdits acides dicarboxyliques ne contient pas plus de 5 atomes de carbone dans la chaîne principale et contient un groupe alkyle ou alkylène à longue chaîne ayant au moins 6 atomes de carbone dans une chaîne secondaire;
b) que la résine polyester ne soit pas un polyester formé à partir d'acide dicarboxylique et de diols caractérisé en ce que 0,5 à 60% en moles du composant diol du polyester est un diol substitué par un groupe dialkyle avec 24 atomes de carbone ou plus que l'on peut obtenir par hydratation à partir d'acides gras dimères, éventuellement substitués par un cycle carboxylique saturé, insaturé ou aromatique; et
c) que la résine polyester ne soit pas une résine polyester formée à partir d'un copolyester insaturé et d'un copolymère vinylique greffé dessus.